# EUROPEAN PATENT SPECIFICATION

(11) **EP 1 282 990 B1**
(45) Date of publication and mention of the grant of the patent: **01.08.2007**
(21) Application number: 01934732.7
(22) Date of filing: 11.05.2001
(51) Int. Cl.: H04Q 7/32

(54) **A METHOD OF ESTIMATING THE LOAD ON A CHANNEL WITHIN A CELL OF A MOBILE TELECOMMUNICATIONS SYSTEM**
VERFAHREN ZUM ABSCHÄTZEN DER LAST AUF EINEM KANAL IN EINER ZELLE EINES MOBILTELEKOMMUNIKATIONSSYSTEMS
PROCEDE D'ESTIMATION DE LA CHARGE D'UN CANAL DANS UNE CELLULE D'UN SYSTEME DE TELECOMMUNICATIONS MOBILES

(30) Priority: 19.05.2000 SE 0001884
(43) Date of publication of application: 12.02.2003
(73) Proprietor: TELEFONAKTIEBOLAGET LM ERICSSON (publ), 164 83 Stockholm (SE)
(72) Inventor: HEDLUND, Jan, Anders, S-931 65 Skellefteä (SE)
(74) Representative: Sjöberg, Mats Hakan
(86) International application number: PCT/SE2001/001051
(87) International publication number: WO 2001/091495

(56) References cited:
- WO-A1-96/24200
- WO-A1-98/33344
- DE-A1- 4 413 484

## Description

### FIELD OF INVENTION

The present invention relates to the field of mobile telecommunications systems. More specifically, the invention relates to a method of estimating the load on a channel in a cellular mobile telecommunications system.

The invention relates particularly, but not exclusively, to a method of estimating the load on a traffic channel in a mobile telecommunications system of the GSM-type, GSM = Global System for Mobile Communication. The invention can also be applied to GSM together with GRPS (General Packet Radio Service) and/or EDGE (Enhanced Data Rates for Global Evolution), and to other mobile telecommunications systems based on TDMA.

### DESCRIPTION OF THE BACKGROUND ART

In a digital mobile telecommunications system that utilises TDMA, information is transmitted during certain time slots in a sequence of frames between radio nodes and one or more mobiles, where payload information may consist of speech information in a speech connection, or data information in a data connection. Moreover, transmitted information may consist of control and synchronisation information that is sent over the speech/data channel or over special channels intended for this purpose, so-called control channels.

The channel structure for the aforesaid TDMA-system includes logic control channels over which control signals are sent between radio nodes and mobiles, and a logic traffic channel TCH over which payload signals (speech and/or data) are transmitted. In turn, the control channel CCH is comprised of a number of special control channels, such as the broadcast channel BCH for example. The aforesaid channel structure also includes channels used for packet data.

It is known to count the number of occupied time slots in order to determine load on a channel in a cell; see for instance PCT-application WO9833344.

PCT-application WO9624200 is considered to represent the nearest state of the art. WO9624200 discloses a method making it possible to realize discontinuous transmission (DTX) in a telecommunications network, e.g. in a GSM (Global System for Mobile Communications) mobile phone network, particularly on the downlink. According to the invention bursts transmitted on the frequency of the broadcasting channel are encoded so that after decoding the mobile phone prevents information contained in a dummy burst to be interpreted as speech. In this way the mobile phone responds with noise on the dummy bursts transmitted on the broadcasting frequency.

### SUMMARY OF THE INVENTION

One problem encountered in GSM-type mobile telecommunications systems is that cell traffic recordings effected with the purpose of measuring the load in a cell are performed on the network side and must be initiated manually. This can not be carried out constantly, since it generates a large amount of data that interferes with the traffic and loads the network side. The problem is also applicable to GSM with data traffic (GPRS) and high rate modulation in respect of GSM (EDGE).

One object of the present invention is to enable the load in a cell to be measured with the aid of any mobile terminal whatsoever in the cell, without needing to make adjustments on the network side.

Another object of the present invention is to enable the load in those cells that cover the point where the measuring equipment is located to be estimated.

According to the invention, the number of free or unoccupied time slots are counted by searching on a control channel for known bit patterns of dummy bursts sent in free time slots, and measuring the metric value of the training sequence included in the burst, on a traffic channel and comparing this value with a threshold value.

One advantage afforded by the invention is that the load on a channel in a cellular mobile telecommunications system can be measured more easily, since it is not necessary to generate test data in the network.

Another advantage is that the measurement can be carried out on several cells, i.e. cells which cover the point in question where the measuring equipment is located, instead of on the network side.

### BRIEF DESCRIPTION OF THE DRAWINGS

The present invention will now be described in more detail with reference to preferred embodiments thereof and also with reference to the accompanying drawings, in which
Figure 1 illustrates part of a cellular mobile telecommunications system, including mobiles and radio nodes;
Figure 2 illustrates the channel structure over the air interface for a GSM-system that includes packet additions;
Figure 3 illustrates a typical cell configuration with four carrier waves and non-combined SDCCH;
Figure 4 illustrates the appearance of a normal burst;
Figure 5 is a schematic illustration of an equalizer; and
Figure 6 is a flowchart illustrating one embodiment of the invention.

### DESCRIPTION OF PREFERRED EMBODIMENTS

The method according to the invention is intended for a mobile telecommunications system of the GSM-type, or GSM with data traffic (GPRS) and/or high rate modulation for GSM (EDGE). GPRS is a data service that changes from circuit switching to packet switching, which increases the rate of data transmission by allowing a user to use more time slots in a frame, and as a result of changing channel coding in relation to current interference levels. EDGE is a modulation technique that gives higher rates and that utilises the same TDMA-frame structure, logic channels and 200kHz carrier waves as GSM.

An inventive system is intended to include one or more radio nodes and one or more mobiles that communicate with each other over a given radio channel.

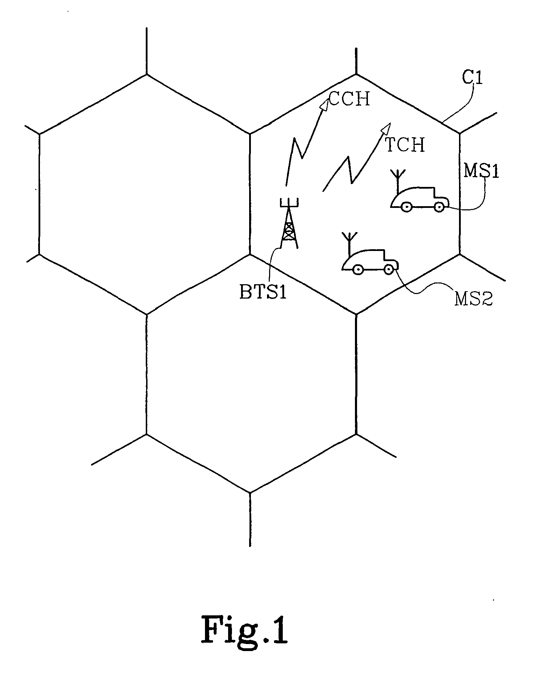

Figure 1 shows part of one such system, which includes the radio node BTS1 that covers the cell C1 in which the mobiles MS1 and MS2 are situated. Transmission between radio nodes and mobiles is effected with the aid of time slots. In a GSM-type system, each carrier is allocated an ARFCN (Absolute Radio Frequency Channel Number), and each ARFCN is divided into eight time slots, in other words eight time slots are used for each carrier, meaning that up to eight mobiles are able to use the same carrier wave by using different time slots. A time slot on an ARFCN is called a physical channel and information transmitted in a time slot is called a burst. An arrangement according to the invention can thus be situated in the mobile MS2.

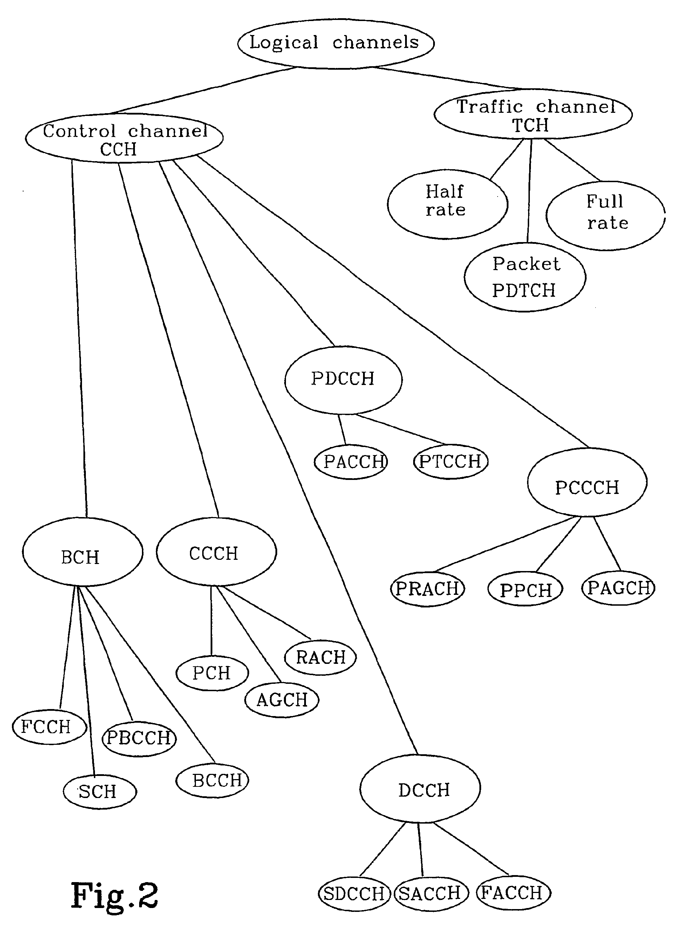

Figure 2 illustrates the structure of logic channels over the air interface of the GSM-system. The channel structure includes control channels over which control signals are transmitted between radio nodes and mobiles. The structure also includes a traffic channel TCH over which payload signals (speech and/or data) are transmitted. As will be evident from Figure 2, the control channel CCH includes a number of special control channels, for instance the broadcast channel BCH, which, in turn, consists of the frequency correction channel FCCH, the synchronisation channel SCH, and the broadcast control channel BCCH. The control channel CCH also includes a dedicated control channel, DCCH, which, in turn, includes a stand alone dedicated control channel, SDCCH. The channel structure also includes packet data channels, for instance PDCCH, PCCCH, DCCH and PDTCH.

The actual traffic channel TCH and the aforesaid control channels are particularly involved in the estimation of the load on a channel in accordance with the invention. Each special control channel, e.g. BCH, SDCCH, DCCH, PDCCH and PCCCH may also be concerned in this estimation in different embodiments of the invention, and also the packet data channel PDTCH.

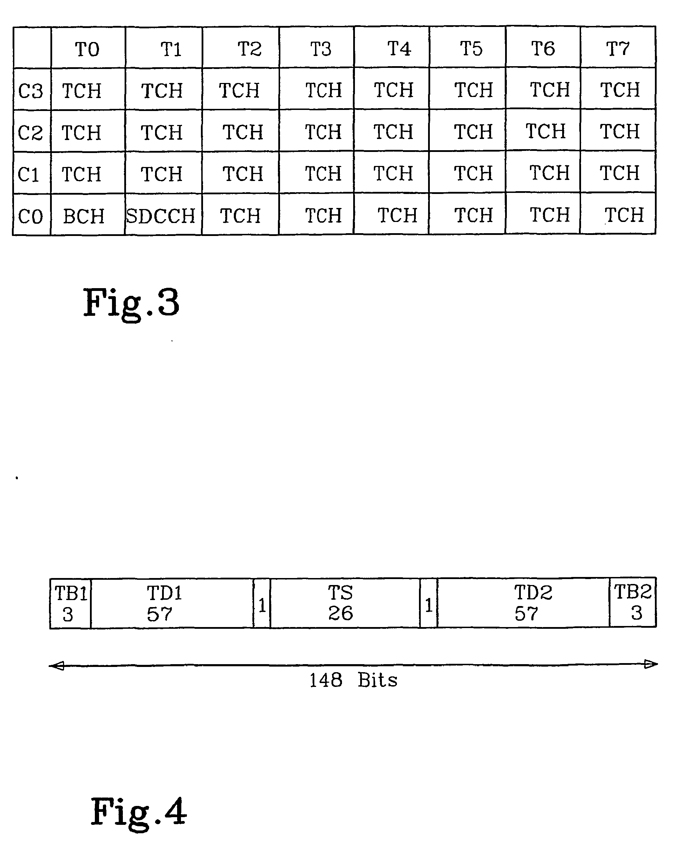

Figure 3 illustrates a typical variant of a cell configuration that is set-up by each operator, this variant including four carriers C1-C4 and non-combined SDCCH. That this latter channel is non-combined means that in the illustrated case only SDCCH is present in time slot T1 on carrier C1, as compared with a combined SDCCH where the control channel SDCCH may be combined with other control channels, for instance with BCCH and/or CCCH, in one and the same time slot. In the illustrated case, the broadcast channel BCH occupies the first time slot TO in the first carrier CO and the dedicated control channel SDCCH occupies the second time slot T1. The remaining time slots are occupied by the traffic channel TCH.

As earlier mentioned, the information sent in a time slot is called a burst. Figure 4 illustrates the appearance of one type of burst, in the illustrated case a so-called normal burst used for standard payload data transmission. The two traffic data fields TD1, TD2 consist of 57 bits, each containing encrypted data or speech, and one bit that indicates whether or not the burst has been borrowed for FACCH signalling. The training sequence TS is a known bit pattern that is used to create a channel model. The training sequence TS is placed in the centre of the burst, because it is assumed that the channel is constant during the full duration of the burst and is thereby influenced in the same way through the whole of the burst. By using this placement of the training sequence, it is more likely that the radio transmission over the channel will not be any different when it influences the training sequence TS than when it influences the information bits TD1 and TD2. Any other placement, e.g. at the beginning of the burst, may possibly result in a channel model that is incorrectly created with respect to the bits at the end of the burst. These tail bits TB are always 000, and are used for the equaliser, which requires a known start- and -stop pattern or configuration.

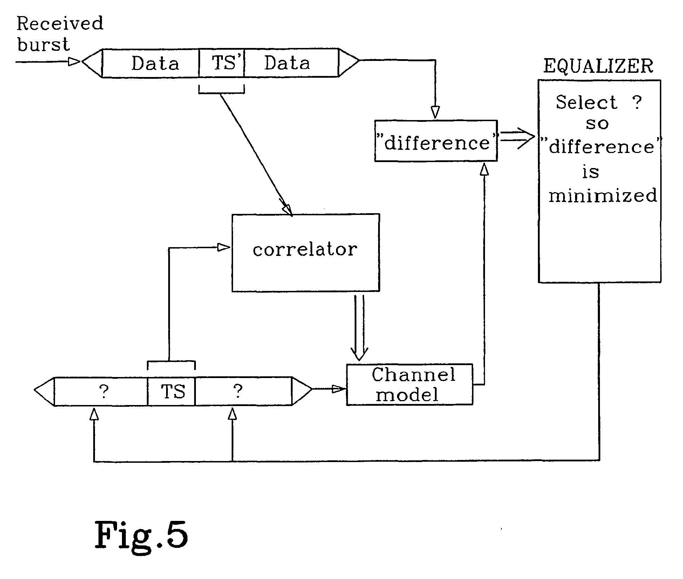

In order to ascertain what has actually been transmitted in the air interface, a received burst is taken into an equaliser and a mathematical model is created for calculating the data most likely to have been transmitted. Figure 5 illustrates a model of an equaliser, in this case a Viterbi equaliser. Other equalisers may alternatively be used, for instance an MLSE (Maximum Likelihood Sequence Estimator). It has been said in the aforegoing that a pre-determined training sequence TS is transmitted in the centre of each burst. The equaliser creates a channel model, by comparing this training sequence TS with the bit pattern TS' received. A likely transmitted bit sequence is then fed through the channel model and the result compared with the received bit sequence. The equaliser then examines the difference between these two bursts and chooses a most likely transmitted bit sequence. According to a pre-given mathematical model that places certain requirements on the equaliser and its result, this examination is repeated until the result is satisfactory and the equaliser fulfils said requirements.

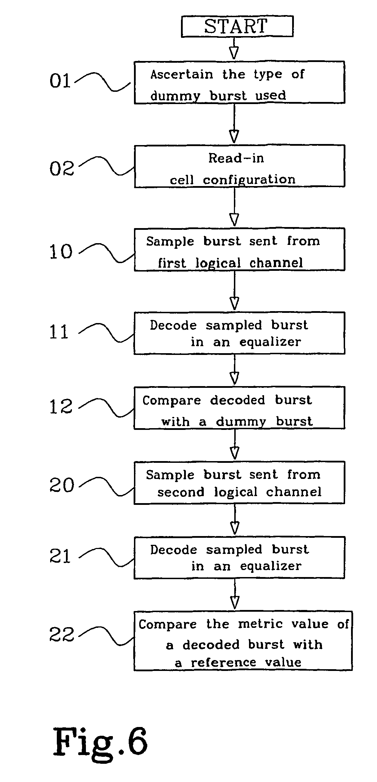

Figure 6 is a flowchart illustrating one embodiment of the present invention. According to this embodiment, dummy bursts (i.e. bursts that contain no information) are used to find and calculate the number of free time slots.

The first step 01 includes ascertaining the type of dummy bursts that have been sent in free time slots within the above specified area, and also to ascertain whether or not DTX (Discontinuous Transmission) has been used within said area. If it becomes quiet in a given time during a call, DTX is coupled in, meaning that comfort noise is applied so as to prevent queer sounds in the receiver. When this takes place, only a few bursts that contain a description of the noise characteristic in the source signal are transmitted instead of the number of bursts that are normally sent. In GSM for instance, DTX reduces the number of transmitted bursts to 12 instead of 104, this latter number being the number normally sent.

The aforedescribed dummy bursts are required since the output power from a radio node must be constant on the first carrier, so that mobiles in an idle mode can find the bursts, and in order to be able to measure in those neighbouring cells that also cover the point in which respective mobiles are situated, possibly in order to find the cell that provides better quality with respect to the radio transmission. According to the GSM-specification 05.02, four different bursts can be used for transmission on free time slots.

The first is a dummy burst having the same training sequence as a normal burst;

The second is a dummy burst that has a special training sequence;

The third is a dummy burst that has the same training sequence as a normal burst. For instance, if the training sequence normally used is training sequence number 1 then training sequence number 5 is used instead;

The fourth burst comprises parts of the SID-information given by the speech encoder, this fourth burst variant being used together with DTX and detected thereby.

The second step 02 includes reading-in the cell configuration found in a first time slot T0 in a first carrier C0. This involves finding out the number of time slots used for the traffic channel TCH on C0, and the total number of carriers used in this carrier. The number of time slots used by the traffic channel TCH can be found by looking at the channel configuration, combined or non-combined SDCCH. If combined SDCCH channel configuration is used, this is a strong indication that all remaining time slots are used as traffic channels TCH. The number of carriers used is obtained from the allocation list of the cell.

The third step 10 involves sampling the burst set from the radio node, for all carriers on a first logic channel, for example CCH. Sampling involves measuring the analogue signal that has a given frequency and that corresponds to a certain channel, at certain time points. Each value is called a sample and measurements are repeated at defined time intervals, so-called sampling time Ts. Just how well the analogue signal can be described digitally, will depend, among other things, on how often the signal is sampled. This is described as the sampling frequency 1/Ts. In one embodiment of the present invention, sampling takes place at the frequency 270.83 kHz for instance.

There then follows the fourth step 11, which includes the encoding of sampled bursts in an equaliser, which involves the sampled burst from the preceding step 10 being processed in the equaliser in order to obtain the most likely transmitted bit pattern.

In the fifth step 12, a decoded burst is compared with the type of dummy burst used in the current specific area to discover an unused time slot. In this case, a comparison is made against one of the aforesaid alternatives for filling a free time slot. In one embodiment of the invention, there is compared a first TD1 and a second data field TD2 (see Figure 4) in the decoded burst from a bit pattern for the pre-defined dummy burst described in standard GSM 05.02, such as to discover an unused time slot.

In another embodiment of the invention there is used a dummy burst that has a special training sequence, or a dummy burst that has the same training sequence as a normal burst but which is mapped differently in order to fill up free time slots. As before mentioned, the mapping is done differently, in so much that when, e.g., training sequence number 1 of eight possible training sequences is normally used, there is used in this case training sequence number 5 instead. The sampled burst is then processed in the equaliser with the aid of the same training sequence as that used for a normal burst, which results in the discovery of an unused time slot by virtue of the metric value for the training sequence (TS) from the equaliser being the highest possible value. The metric value is a value that is obtained from the equaliser and that derives from the training sequence. The metric value becomes greater with increasing differences between the known training sequence and the received training sequence. An anticipated low value is not obtained when the training sequence from a dummy burst is processed in the equaliser. This is because the equaliser endeavours to decode the dummy burst as though it were a normal burst. As a result, the metric value of a dummy burst will be the highest possible value.

A third embodiment involves the use of DTX. When DTX is used, only a few bursts are sent, for instance 12 bursts as in GSM, instead of the number of bursts that are normally sent during a call connection, for instance 104 bursts in the case of GSM. This means that it is only possible to look at the few bursts that are sent, in order to discover an occupied time slot.

The sixth step 20 in Figure 6 involves sampling the burst sent from the radio node, for all carriers on a second logic channel, e.g. TCH.

The seventh step 21 involves decoding sample bursts in an equaliser, wherein the sampled burst from the preceding step 20 is processed in the equaliser in order to obtain the most likely transmitted bit pattern.

The eighth step 22 involves a comparison of the metric value of the decoded burst for the training sequence with a threshold value, in order to thereby discover an unused time slot. An unused time slot is discovered by virtue of the metric value being greater than the threshold value, since the metric value becomes greater with increasing differences between received training sequences and the known training sequence.

It will be understood that the invention is not restricted to the aforedescribed and illustrated exemplifying embodiments thereof, and that modifications can be made within the scope of the accompanying claims.

## Claims

1. A method of estimating the load on a channel within a specific area (C1) in a mobile telecommunications system that includes at least one radio node (BTS1) adapted for communication with mobiles (MS1, MS2), wherein said load is estimated in a radio unit (MS2) situated within said specific area (C1), and by calculating the number of occupied time slots in each carrier (CO, C1,...), which number can then represent the load on said channel and wherein the method is **characterized by** comprising the steps of
- ascertaining (01) the type of dummy bursts sent in free or unoccupied time slots within the aforesaid specific area;
- reading-in (02) the cell configuration from a first time slot (T0) in a first carrier (C0),
- and wherein in respect of all carriers on a first logic channel the method comprises the further steps of
- sampling (10) a burst transmitted from a radio node (BTS1);
- decoding (11) the sampled burst in an equalizer;
- comparing (12) the decoded burst with that type of dummy burst used in the specific area (C1) concerned, so as to discover an unused time slot;
and in respect of all carriers on a second logic channel comprises the further steps of
- sampling (20) a burst sent from a radio node (BTS1);
- decoding (21) the sampled burst in an equaliser;
and comparing (22) the metric value of the decoded burst in respect of the training sequence (TS) included in the burst with a threshold value such as to discover an unused time slot.

2. A method according to Claim 1, **characterized in that** said first logic channel is a control channel (CCH).

3. A method according to any one of Claims 1-2, **characterized in that** said second logic channel is a traffic channel (TCH).

4. A method according to any one of Claims 1-3, **characterized in that** said mobile telecommunications system is a system of the type, GSM, GSM with GPRS, GSM with EDGE or GSM with EDGE and GPRS.

5. A method according to any one of Claims 1-4, **characterized in that** when using in said specific area (C1) a dummy burst having the same training sequence (TS) as that used for a normal burst in order to fill up free time slots, a first data field (TD1) and a second data field (TD2) in the decoded burst from a first logic channel (CCH) is compared with the bit pattern for the pre-defined dummy burst described in the standard description GSM 05.02, such as to discover an unused time slot.

6. A method according to any one of Claims 1-4, **characterized in that** when there is used in said specific area (C1) a dummy burst having a special training sequence or a dummy burst having the same training sequence as that used for a normal burst but mapped differently in order to fill up free time slots, the aforesaid sampled burst from a first logic channel (CCH) is processed in the equaliser with the aid of the same training sequence as that used for a normal burst, and an unused time slot is discovered by virtue of the metric value of the training sequence (TS) from the equaliser being the highest possible value.

7. A method according to any one of Claims 1-6, **characterized in that** the first step (01) also includes ascertaining whether or not additional noise is used within the aforesaid specific area upon interruption of transmission (DTX).

8. A method according to Claim 7, **characterized in that** when bursts that contain a description of the characteristic of the noise in the source signal are used in the event of interrupted transmission (DTX) in the specific area (C1) concerned, only those bursts that include a description of the noise characteristic that are sent to discover an occupied time slot are examined.

9. A method according to any one of Claims 1-8, **characterized in that** said decoding is effected in a Viterbi-type equaliser.

10. A method according to any one of Claims 1-8, **characterized in that** said decoding is effected in an equaliser of the MLSE-type (Maximum Likelihood Sequence Estimator).

11. A radio unit for estimating the load on a channel within a specific area (C1) of a mobile telecommunications system, comprising at least one radio node (BTS1) adapted to communicate with mobiles (MS1, MS2), wherein said estimation is effected by calculating the number of occupied time slots in each carrier (C0, C1...) which can then represent the load on the channel, including means for determining which type of dummy bursts are used, and means for reading-in the cell configuration of the specific area in question, **characterized in that** the radio unit further includes means for sampling a burst transmitted on a first logic channel, means for decoding said sampled burst in an equaliser, means for comparing said decoded burst with a previously known dummy burst, means for sampling a burst transmitted on a second logic channel, means for decoding said burst in an equaliser, and means for comparing the metric value of a decoded burst in respect of the training sequence (TS) included in the burst with a threshold value.

12. A radio unit according to Claim 11, **characterized in that** the radio unit also includes means for determining whether or not noise was used during a call in the specific area (C1) upon interrupted transmission (DTX).

13. A radio unit according to any one of Claims 11-12, **characterized in that** said burst decoding means is a Viterbi-type equaliser.

14. A radio unit according to any one of Claims 11-12, **characterized in that** said burst decoding means is an equaliser of the type MLSE (Maximum Likelihood Sequence Estimator).

## Patentansprüche

1. Verfahren zum Schätzen der Last auf einem Kanal innerhalb eines spezifischen Bereichs (C1) in einem Mobilfunk-Telekommunikationssystem, das mindestens einen Funkknoten (BTS1) aufweist, der für die Kommunikation mit Mobilfunkgeräten (MS1, MS2) eingerichtet ist, wobei die Last in einer Funkeinheit (MS2) geschätzt wird, die sich innerhalb des spezifischen Bereichs (C1) befindet, und zwar durch Berechnen der Anzahl der belegten Zeitschlitze in jedem Träger (C0, C1, ...), wobei diese Anzahl dann die Last auf dem Kanal darstellen kann und wobei das Verfahren **dadurch gekennzeichnet ist, dass** es die folgenden Schritte umfaßt:
- Ermitteln (01) des Typs der Dummy-Bursts, die in freien oder unbelegten Zeitschlitzen innerhalb des oben erwähnten spezifischen Bereichs gesendet werden;
- Einlesen (02) der Zellenkonfiguration aus einem ersten Zeitschlitz (T0) in einem erstenTräger (C0),
und wobei das Verfahren in bezug auf alle Träger auf einem ersten logischen Kanal die folgenden weiteren Schritte umfaßt:
- Abtasten (10) eines von einem ersten Funkknoten (BTS1) übertragenen Bursts;
- Decodieren (11) des abgetasteten Bursts in einem Entzerrer;
- Vergleichen (12) des decodierten Bursts mit demjenigen Typ von Dummy-Burst, der in dem betreffenden Bereich (C1) verwendet wird, um einen ungenutzten Zeitschlitz aufzufinden;
und in bezug auf alle Träger auf einem zweiten logischen Kanal die folgenden weiteren Schritte umfaßt:
- Abtasten (20) eines von einem Funkknoten (BTS1) gesendeten Bursts;
- Decodieren (21) des abgetasteten Bursts in einem Entzerrer;
- und Vergleichen (22) des metrischen Werts des decodierten Bursts in bezug auf die in den Burst eingeschlossene Trainingssequenz (TS) mit einem Schwellwert, um einen ungenutzten Zeitschlitz aufzufinden.

2. Verfahren nach Anspruch 1, **dadurch gekennzeichnet, dass** der erste logische Kanal ein Steuerkanal (CCH) ist.

3. Verfahren nach einem der Ansprüche 1 und 2, **dadurch gekennzeichnet, dass** der zweite logische Kanal ein Verkehrskanal (TCH) ist.

4. Verfahren nach einem der Ansprüche 1 bis 3, **dadurch gekennzeichnet, dass** das Mobilfunk-Telekommunikationssystem ein System eines der folgenden Typen ist: GSM, GSM mit GPRS, GSM mit EDGE oder GSM mit EDGE und GPRS.

5. Verfahren nach einem der Ansprüche 1 bis 4, **dadurch gekennzeichnet, dass**, wenn in dem spezifischen Bereich (C1) ein Dummy-Burst mit der gleichen wie der für einen normalen Burst verwendeten Trainingssequenz (TS) verwendet wird, um freie Zeitschlitze aufzufüllen, ein erstes Datenfeld (TD1) und ein zweites Datenfeld (DT2) im decodierten Burst aus einem ersten logischen Kanal (CCH) mit dem Bitmuster für den vordefinierten Dummy-Burst verglichen wird, der in der Standard-Beschreibung GSM 05.02 beschrieben ist, um einen ungenutzten Zeitschlitz aufzufinden.

6. Verfahren nach einem der Ansprüche 1 bis 4, **dadurch gekennzeichnet, dass**, wenn in dem spezifischen Bereich (C1) ein Dummy-Burst mit einer speziellen Trainingssequenz oder ein Dummy-Burst mit der gleichen wie der für einen normalen Burst verwendeten, aber anders zugeordneten Trainingssequenz verwendet wird, der oben erwähnte abgetastete Burst aus einem ersten logischen Kanal (CCH) im Entzerrer mit der Hilfe der gleichen wie der für einen normalen Burst verwendeten Trainingssequenz verarbeitet wird und ein ungenutzter Zeitschlitz mittels desjenigen metrischen Werts der Trainingssequenz (TS) vom Entzerrer aufgefunden wird, der den höchstmöglichen Wert ergibt.

7. Verfahren nach einem der Ansprüche 1 bis 6, **dadurch gekennzeichnet, dass** der erste Schritt (01) außerdem den folgenden Schritt aufweist: Ermitteln, ob bei Unterbrechung der Übertragung (DTX) innerhalb des oben erwähnten spezifischen Bereichs zusätzliches Rauschen verwendet wird oder nicht.

8. Verfahren nach Anspruch 7, **dadurch gekennzeichnet, dass**, wenn im Fall einer unterbrochenen Übertragung (DTX) im betreffenden spezifischen Bereich (C1) Bursts verwendet werden, die eine Beschreibung der Rauschcharakteristik im Quellensignal enthalten, nur diejenigen Bursts überprüft werden, die eine Beschreibung der Rauschcharakteristik aufweisen und die gesendet werden, um einen belegten Zeitschlitz aufzufinden.

9. Verfahren nach einem der Ansprüche 1 bis 8, **dadurch gekennzeichnet, dass** die Decodierung in einem Entzerrer des Viterbi-Typs bewirkt wird.

10. Verfahren nach einem der Ansprüche 1 bis 8, **dadurch gekennzeichnet, dass** die Decodierung in einem Entzerrer des MLSE-Typs (Maximum-Likelihood-Sequenzschätzer) bewirkt wird.

11. Funkeinheit zum Schätzen der Last auf einem Kanal innerhalb eines spezifischen Bereichs (C1) eines Mobilfunk-Telekommunikationssystems, umfassend mindestens einen Funkknoten (BTS1), der dafür eingerichtet ist, mit Mobilfunkgeräten (MS1, MS2) zu kommunizieren, wobei die Schätzung durch Berechnen der Anzahl der belegten Zeitschlitze in jedem Träger (C0, C1, ...) bewirkt wird, welche dann die Last auf dem Kanal darstellen kann, mit: Mitteln zum Ermitteln, welcher Typ von Dummy-Bursts verwendet wird, und Mitteln zum Einlesen der Zellenkonfiguration des betreffenden spezifischen Bereichs, **dadurch gekennzeichnet, dass** die Funkeinheit ferner folgendes aufweist: Mittel zum Abtasten eines auf einem ersten logischen Kanal übertragenen Bursts, Mittel zum Decodieren des abgetasteten Bursts in einem Entzerrer, Mittel zum Vergleichen des decodierten Bursts mit einem vorher bekannten Dummy-Burst, Mittel zum Abtasten eines auf einem zweitem logischen Kanal übertragenen Bursts, Mittel zum Decodieren des Bursts in einem Entzerrer und Mittel zum Vergleichen des metrischen Werts eines decodierten Bursts in bezug auf die in den Burst eingeschlossene Trainingssequenz (TS) mit einem Schwellwert.

12. Funkeinheit nach Anspruch 11, **dadurch gekennzeichnet, dass** die Funkeinheit außerdem Mittel zum Bestimmen, ob bei unterbrochener Übertragung (DTX) innerhalb des oben erwähnten spezifischen Bereichs (C1) Rauschen verwendet wurde oder nicht, aufweist.

13. Funkeinheit nach einem der Ansprüche 11 bis 12, **dadurch gekennzeichnet, dass** das Burst-Decodiermittel ein Entzerrer des Viterbi-Typs ist.

14. Funkeinheit nach einem der Ansprüche 11 bis 12, **dadurch gekennzeichnet, dass** das Burst-Decodiermittel ein Entzerrer des MLSE-Typs (Maximum-Likelihood-Sequenzschätzer) ist.

## Revendications

1. Procédé d'estimation de la charge sur un canal à l'intérieur d'une zone spécifique (C1) dans un système de télécommunications mobiles qui inclut au moins un noeud radio (BTS1) adapté pour une communication avec des téléphones mobiles (MS1, MS2), dans lequel ladite charge est estimée dans une unité radio (MS2) située à l'intérieur de ladite zone spécifique (C1 et en calculant le nombre de fenêtres temporelles occupées dans chaque porteuse (C0, C1, ...), lequel nombre peut alors représenter la charge sur ledit canal et dans lequel le procédé est **caractérisé** comprenant les étapes de:
évaluation (01) du type de salves fictives qui sont envoyées dans des fenêtres temporelles libres ou inoccupées à l'intérieur de la zone spécifique susmentionnée;
lecture (02) de la configuration de cellule à partir de la première fenêtre temporelle (T0) dans une première porteuse (C0) et dans laquelle,
en relation avec toutes les porteuses sur un premier canal logique, le procédé comprend les étapes supplémentaires de:
échantillonnage (10) d'une salve émise depuis un noeud radio (BTS1);
décodage (11) de la salve échantillonnée dans un égaliseur;
comparaison (12) de la salve décodée avec le type de salve fictive utilisé dans la zone spécifique (C1) concernée de manière à découvrir une fenêtre temporelle inutilisée;
et en relation avec toutes les porteuses sur un second canal logique, le procédé comprend les étapes supplémentaires de:
échantillonnage (20) d'une salve envoyée depuis un noeud radio (BTS1);
décodage (21) de la salve échantillonnée dans un égaliseur; et
comparaison (22) de la valeur de mesure de la salve décodée en relation avec la séquence d'apprentissage (TS) incluse dans la salve avec une valeur de seuil de manière à découvrir une fenêtre temporelle inutilisée.

2. Procédé selon la revendication 1, **caractérisé en ce que** ledit premier canal logique est un canal de commande (CCH).

3. Procédé selon l'une quelconque des revendications 1-2, **caractérisé en ce que** ledit second canal logique est un canal de trafic (TCH).

4. Procédé selon l'une quelconque des revendications 1-3, **caractérisé en ce que** ledit système de télécommunications mobiles est un système du type GSM, GSM avec GPRS, GSM avec EDGE ou GSM avec EDGE et GPRS.

5. Procédé selon l'une quelconque des revendications 1-4, **caractérisé en ce que**, lors de l'utilisation dans ladite zone spécifique (C1) d'une salve fictive présentant la même séquence d'apprentissage (TS) que celle utilisée pour une salve normale afin de remplir des fenêtres temporelles libres, une première zone de données (TD1) et une seconde zone de données (TD2) dans la salve décodée en provenance d'un premier canal logique (CCH) sont comparées avec le motif binaire pour la salve fictive prédéfinie décrite selon la description standard GSM 05.02 de manière à découvrir une fenêtre temporelle inutilisée.

6. Procédé selon l'une quelconque des revendications 1-4, **caractérisé en ce que**, lorsque l'on utilise dans ladite zone spécifique (C1) une salve fictive présentant une séquence d'apprentissage spéciale ou une salve fictive présentant la même séquence d'apprentissage que celle utilisée pour une salve normale mais cartographiée différemment afin de remplir des fenêtres temporelles libres, la salve échantillonnée susmentionnée en provenance d'un premier canal logique (CCH) est traitée dans l'égaliseur à l'aide de la même séquence d'apprentissage que celle utilisée pour une salve normale, et une fenêtre temporelle inutilisée est découverte en vertu de la valeur de mesure de la séquence d'apprentissage (TS) en provenance de l'égaliseur qui est la valeur la plus élevée possible.

7. Procédé selon l'une quelconque des revendications 1-6, **caractérisé en ce que** la première étape (01) inclut également l'évaluation de si oui ou non un bruit additionnel est utilisé à l'intérieur de la zone spécifique susmentionnée suite à l'interruption de l'émission (DTX).

8. Procédé selon la revendication 7, **caractérisé en ce que**, lorsque des salves qui contiennent une description de la caractéristique du bruit dans le signal de source sont utilisées dans le cas de l'émission interrompue (DTX) dans la zone spécifique (C1) concernée, seulement les salves qui incluent une description de la caractéristique de bruit qui sont envoyées pour découvrir une fenêtre temporelle occupée sont examinées.

9. Procédé selon l'une quelconque des revendications 1-8, **caractérisé en ce que** ledit décodage est réalisé dans un égaliseur du type Viterbi.

10. Procédé selon l'une quelconque des revendications 1-8, **caractérisé en ce que** ledit décodage est réalisé dans un égaliseur du type MLSE (Estimateur de Séquence à Maximum de Vraisemblance).

11. Unité radio pour estimer la charge sur un canal à l'intérieur d'une zone spécifique (C1) d'un système de télécommunications mobiles, comprenant au moins un noeud radio (BTS1) adapté pour communiquer avec des téléphones mobiles (MS1, MS2), dans lequel ladite estimation est réalisée en calculant le nombre de fenêtres temporelles occupées dans chaque porteuse (C0, C1...), lequel nombre peut alors représenter la charge sur le canal, incluant un moyen pour déterminer quel type de salves fictives sont utilisées et un moyen pour lire la configuration de cellule de la zone spécifique en question, **caractérisée en ce que** l'unité radio inclut en outre un moyen pour échantillonner une salve émise sur un premier canal logique, un moyen pour décoder ladite salve échantillonnée dans un égaliseur, un moyen pour comparer ladite salve décodée avec une salve fictive connue au préalable, un moyen pour échantillonner une salve émise sur un second canal logique, un moyen pour décoder ladite salve dans un égaliseur et un moyen pour comparer la valeur de mesure d'une salve décodée en relation avec la séquence d'apprentissage (TS) incluse dans la salve avec une valeur de seuil.

12. Unité radio selon la revendication 11, **caractérisée en ce que** l'unité radio inclut également un moyen pour déterminer si oui ou non un bruit a été utilisé pendant un appel dans la zone spécifique (C1) suite à une émission interrompue (DTX).

13. Unité radio selon l'une quelconque des revendications 11-12, **caractérisée en ce que** ledit moyen de décodage de salve est un égaliseur du type Viterbi.

14. Unité radio selon l'une quelconque des revendications 11-12, **caractérisée en ce que** ledit moyen de décodage de salve est un égaliseur du type MLSE (Estimateur de Séquence à Maximum de Vraisemblance).
